# EUROPEAN PATENT APPLICATION

(11) **EP 3 422 198 A1**
(43) Date of publication of application: **02.01.2019**
(21) Application number: 17769469.2
(22) Date of filing: 23.03.2017
(51) Int. Cl.: G06F 15/78, G06F 15/80

(54) **MULTI-CHIP MULTIPROCESSOR CACHE COHERENCE OPERATION METHOD AND MULTI-CHIP MULTIPROCESSOR**

(30) Priority: 25.03.2016 CN 201610177729
(71) Applicant: Huawei Technologies Co., Ltd., Longgang District Shenzhen, Guangdong 518129 (CN)
(72) Inventor: GU, Xiongli, Shenzhen Guangdong 518129 (CN); FANG, Lei, Shenzhen Guangdong 518129 (CN); LIU, Peng, Hangzhou Zhejiang 310058 (CN); HU, Qi, Hangzhou Zhejiang 310058 (CN)
(74) Representative: Maiwald Patent- und Rechtsanwaltsgesellschaft mbH
(86) International application number: PCT/CN2017/077866
(87) International publication number: WO 2017/162192

(57) **Abstract**

A multiple chip multiprocessor cache coherence operation method and a multiple chip multiprocessor are disclosed. The method includes: receiving a write request for a first data block, where the write request is sent by a first processor core of a first processor chip, and the write request includes an identifier of the first data block and to-be-written data (S710); finding, in an on-chip directory of the first processor chip based on the identifier of the first data block, an on-chip directory entry corresponding to the first data block, determining, from the found on-chip directory entry, a core identifier of a processor core storing the first data block, and sending, to the processor core corresponding to the core identifier, an instruction message for deleting the first data block (S720); when it is determined, based on an on-chip unique identifier in the on-chip directory entry, that the first data block is unique to the first processor chip, skipping sending an inter-chip directory query request for the first data block (S730); and instructing the first processor core to write the to-be-written data into a private cache of the first processor core (S740).

## Description

### TECHNICAL FIELD

The present invention relates to the field of information technologies, and more specifically, to a multiple chip multiprocessor coherence operation method and a multiple chip multiprocessor.

### BACKGROUND

In a chip multiprocessor (Chip Multiprocessor, CMP) application, there is a scenario in which some data blocks are accessed by one or more processor cores (hereinafter referred to as core, Core). In this scenario, the data block is usually stored in a shared cache (Sharing Cache) of a processor chip, so that one or more cores can access the data block. In order to accelerate access to the data block, a copy of the data block is created in a private cache (Private Cache) of the one or more cores that have accessed the data block. In this case, when the core that has accessed the data block needs to access the data block again, the core merely needs to access the data block in the private cache of the core. Access to the data block includes read access (Read Access) and write access (Write Access). During write access to a data block, because a copy of the data block may be stored in private caches of a plurality of cores, after a core performs a write operation on the data block, coherence between the copies of the data block in the private caches of the plurality of cores needs to be maintained, which is also referred to as a cache coherence (Cache Coherence) operation.

A basic principle of the cache coherence operation is: When the copy of the data block in a cache of a core is processed by performing a write operation, the cache coherence operation needs to be performed by invalidating (Invalid) the copy of the data block in a private cache of another core (that is, deleting the data block from the cache of the another core) or updating (Update) the copy of the data block in the private cache of the another core. In order to resolve a coherence problem, specific cores, in which the copy of the data black exists, of the multi-core processor needs to be determined (that is, accessors of the data block are determined).

Commonly used cache coherence solutions may be using a bus snooping (Snoop)-based coherence protocol and using a directory (Directory)-based coherence protocol. For the former, when a data block in a cache of a core is modified, a broadcast message that the data block is modified needs to be sent to other cores that store a copy of the data block, so as to instruct the cores to perform a coherence operation. For the latter, an accessor (namely, cores in the multi-core processor that store the data block) list is recorded by using an access directory of the data block; when a copy of a data block in a cache of a processor core is modified, a notification message that the data block is modified is sent only to another recorded accessor of the data block, so that the another accessor of the data block performs a cache coherence operation on the data block. Continuously increasing processor cores make the bus snooping-based coherence solution face a performance and bandwidth bottleneck (broadcasting a message needs to occupy a lot of processing resources and bandwidth), while the directory-based coherence protocol is widely used because of good scalability.

With continuous development of technologies, existing applications pose higher requirements on a capability of the processor, and a multiple chip multiprocessor (multiple chip multiprocessor, Multi-CMP) has emerged. This type of processor has a plurality of processor chips, and each chip includes at least two processor cores. For such a processor, if a write operation is performed on a data block, a cache coherence operation needs to be performed for a processor chip in which a core performing the write operation is located, and a cache coherence operation also needs to be performed on the data block in another processor chip. In the prior art, when a coherence operation is performed on a data block in a multiple chip multiprocessor, a processor chip in which a core performing a write operation is located needs to communicate with other processor chips, to determine which chips of the other processor chips and which cores of the chips have cached a copy of the data block, so as to perform the coherence operation.

It can be learned from the foregoing that, in the multiple chip multiprocessor, each write operation on a data block triggers communication between the processor chips to perform a coherence operation on a to-be-written data block. This leads to more communication overheads and increases a delay and power consumption.

### SUMMARY

Embodiments of the present invention provide a multiple chip multiprocessor cache coherence operation method and a multiple chip multiprocessor, so as to reduce a delay and power consumption in a cache coherence operation process.

According a first aspect, a multiple chip multiprocessor cache coherence operation method is provided, where the multiple chip multiprocessor includes at least two processor chips and an inter-chip directory, each entry of the inter-chip directory is in one-to-one correspondence with each data block written into a private cache of a processor core in the multiple chip multiprocessor, and each entry of the inter-chip directory records a data block identifier and a chip identifier list of a processor chip storing the data block; and the processor chip includes at least two processor cores and an on-chip directory corresponding to the processor chip, each processor core includes a private cache used for storing a data block, each entry of the on-chip directory is in one-to-one correspondence with each data block written into a private cache of a processor core in the processor chip, and each entry of the on-chip directory records a data block identifier, a core identifier list of a processor core storing the data block, and an on-chip unique identifier, where the on-chip unique identifier is used to identify whether the data block is unique to the processor chip in the multiple chip multiprocessor; and the method includes:
receiving a write request for a first data block, where the write request is sent by a first processor core of a first processor chip, and the write request includes an identifier of the first data block and to-be-written data;
finding, in an on-chip directory of the first processor chip based on the identifier of the first data block, an on-chip directory entry corresponding to the first data block, determining, from the found on-chip directory entry, a core identifier of a processor core storing the first data block, and sending, to the processor core corresponding to the core identifier, an instruction message for deleting the first data block;
when it is determined, based on an on-chip unique identifier in the on-chip directory entry, that the first data block is unique to the first processor chip, skipping sending an inter-chip directory query request for the first data block; and
instructing the first processor core to write the to-be-written data into a private cache of the first processor core.

The inter-chip directory is configured in the multiple chip multiprocessor, and the on-chip directory is configured in each processor chip. In addition to the data block identifier and the core identifier list of the processor cores caching the data block, each entry in the on-chip directory includes the on-chip unique identifier. The on-chip unique identifier is used to record whether the data block corresponding to the entry is unique to the processor chip in the multiple chip multiprocessor. According to the foregoing method, when a cache coherence operation is performed, if it is determined that an on-chip unique identifier recorded in an on-chip directory entry corresponding to a data block is true, the coherence operation is performed only in the processor chip. Compared with the prior art that inter-chip communication is required for a write operation on any one data block, this method reduces overheads, thereby effectively reducing a delay and power consumption.

With reference to the first aspect, in a first possible implementation, when it is determined, based on the on-chip unique identifier in the on-chip directory entry, that the first data block is not unique to the first processor chip,
sending an inter-chip directory query request for the first data block to the inter-chip directory, where the query request includes the identifier of the first data block;
querying the inter-chip directory based on the identifier of the first data block, and determining an inter-chip directory entry corresponding to the first data block;
determining, from the inter-chip directory entry, a chip identifier of a processor chip storing the first data block, and sending, to another processor chip that is corresponding to the chip identifier and that is different from the first processor chip, an instruction message for deleting the first data block, where the instruction message includes the identifier of the first data block; and
instructing the first processor core to write the to-be-written data into a private cache of the first processor core.

With reference to the first aspect or the first possible implementation of the first aspect, in a second possible implementation, after the instructing the first processor core to write the to-be-written data into the private cache of the first processor core, the method further includes instructing the first processor chip to write the to-be-written data into a shared cache of the first processor chip.

With reference to any one of the first aspect or the first and second possible implementations of the first aspect, in a third possible implementation, when an entry corresponding to the first data block cannot be found in the on-chip directory of the first processor chip based on the identifier of the first data block, and an entry corresponding to the identifier of the first data block is found in the inter-chip directory based on the identifier of the first data block,
finding, in the inter-chip directory based on the identifier of the first data block, the inter-chip directory entry corresponding to the first data block, determining, from the inter-chip directory entry, the chip identifier of the processor chip storing the first data block, and sending, to the processor chip corresponding to the chip identifier, an instruction message for deleting the first data block, where the instruction message includes the identifier of the first data block;
instructing the first processor core to write the to-be-written data into a private cache of the first processor core; and
creating an entry corresponding to the first data block in the on-chip directory of the first processor chip, writing a core identifier of the first processor core into a core identifier list, in the entry, of a processor core storing the first data block, and setting the on-chip unique identifier to true.

With reference to any one of the first aspect or the first and second possible implementations of the first aspect, in a fourth possible implementation, when an entry corresponding to the first data block cannot be found in the on-chip directory of the first processor chip based on the identifier of the first data block, and an entry corresponding to the identifier of the first data block cannot be found in the inter-chip directory based on the identifier of the first data block,
instructing to read the first data block from a memory based on the identifier of the first data block, and storing the first data block into the private cache of the first processor core;
creating an on-chip directory entry for the first data block in the on-chip directory of the first processor chip, recording an identifier of the first processor core into a core identifier list of a processor core storing the first data block, and setting the on-chip unique identifier to true; and
creating an inter-chip directory entry corresponding to the first data block in the inter-chip directory, and recording an identifier of the first processor chip into a chip identifier list of a processor chip storing the first data block.

With reference to the first or the third possible implementation of the first aspect, in a fifth possible implementation, after the another processor chip that is corresponding to the chip identifier and that is different from the first processor chip receives the instruction message for deleting the first data block, the method further includes:
finding, by each processor chip different from the first processor chip, in an on-chip directory of each processor chip based on the identifier of the first data block, an on-chip directory entry corresponding to the first data block, determining, from each on-chip directory entry corresponding to the first data block, a core identifier of a processor core storing the first data block, and sending, to the processor core corresponding to the core identifier, the instruction message for deleting the first data block.

According to a second aspect, a multiple chip multiprocessor is further provided, where the multiple chip multiprocessor includes at least two processor chips and an inter-chip directory cache, the inter-chip directory cache includes an inter-chip directory storage unit and an inter-chip directory control unit, each inter-chip directory entry stored in the inter-chip directory storage unit is in one-to-one correspondence with each data block written into a private cache of a processor core in the multiple chip multiprocessor, and each inter-chip directory entry records a data block identifier and a chip identifier list of a processor chip storing the data block; and the processor chip includes at least two cores and an on-chip directory cache corresponding to the processor chip, the on-chip directory cache includes an on-chip directory storage unit and an on-chip directory control unit, each of the at least two cores includes a private cache used for storing a data block, each on-chip directory entry stored in the on-chip directory storage unit is in one-to-one correspondence with each data block written into the private cache of the processor core in the processor chip, and each on-chip directory entry records a data block identifier, a core identifier list of a processor core storing the data block, and an on-chip unique identifier, where the on-chip unique identifier is used to identify whether the data block is unique to the processor chip in the multiple chip multiprocessor;
an on-chip directory control unit of a first processor chip receives a write request for a first data block, where the write request is sent by a first processor core of the first processor chip, and the write request includes an identifier of the first data block and to-be-written data;
the on-chip directory control unit of the first processor chip finds, in an on-chip directory storage unit of the first processor chip based on the identifier of the first data block, an on-chip directory entry corresponding to the first data block, determines, from the found on-chip directory entry, a core identifier of a processor core storing the first data block, and sends, to the processor core corresponding to the core identifier, an instruction message for deleting the first data block;
when it is determined, based on an on-chip unique identifier in the on-chip directory entry, that the first data block is unique to the first processor chip, the on-chip directory control unit of the first processor chip skips sending an inter-chip directory query request for the first data block to the inter-chip directory control unit; and
the on-chip directory control unit of the first processor chip instructs the first processor core to write the to-be-written data into the private cache of the first processor core.

With reference to the second aspect, in a first possible implementation, when it is determined, based on the on-chip unique identifier in the on-chip directory entry, that the first data block is not unique to the first processor chip,
the on-chip directory control unit of the first processor chip sends, to the inter-chip directory control unit, an inter-chip directory query request for the first data block, where the query request includes the identifier of the first data block;
the inter-chip directory control unit queries the inter-chip directory storage unit based on the identifier of the first data block, and determines an inter-chip directory entry corresponding to the first data block;
the inter-chip directory control unit determines, from the inter-chip directory entry, a chip identifier of a processor chip storing the first data block, and sends, to another processor chip that is corresponding to the chip identifier and that is different from the first processor chip, an instruction message for deleting the first data block, where the instruction message includes the identifier of the first data block; and
the on-chip directory control unit of the first processor chip instructs the first processor core to write the to-be-written data into the private cache of the first processor core.

With reference to the second aspect or the first possible implementation of the second aspect, in a second possible implementation, after instructing the first processor core to write the to-be-written data into the private cache of the first processor core, the on-chip directory control unit of the first processor chip is further configured to instruct the first processor chip to write the to-be-written data into a shared cache of the first processor chip.

With reference to any one of the second aspect or the first and second possible implementations of the second aspect, in a third possible implementation, when an entry corresponding to the first data block cannot be found in the on-chip directory of the first processor chip based on the identifier of the first data block, and an entry corresponding to the identifier of the first data block is found in the inter-chip directory based on the identifier of the first data block,
the on-chip directory control unit of the first processor chip is further configured to instruct the inter-chip directory control unit to find, in the inter-chip directory storage unit based on the identifier of the first data block, the inter-chip directory entry corresponding to the first data block, determine, from the inter-chip directory entry, the chip identifier of the processor chip storing the first data block, and send, to the processor chip corresponding to the chip identifier, an instruction message for deleting the first data block, where the instruction message includes the identifier of the first data block;
the on-chip directory control unit of the first processor chip is further configured to instruct the first processor core to write the to-be-written data into the private cache of the first processor core; and
the on-chip directory control unit of the first processor chip is further configured to create an entry corresponding to the first data block in the on-chip directory of the first processor chip, write a core identifier of the first processor core into a core identifier list, in the entry, of a processor core storing the first data block, and set the on-chip unique identifier to true.

With reference to any one of the second aspect or the first and second possible implementations of the second aspect, in a fourth possible implementation, when an entry corresponding to the first data block cannot be found in the on-chip directory of the first processor chip based on the identifier of the first data block, and an entry corresponding to the identifier of the first data block cannot be found in the inter-chip directory based on the identifier of the first data block;
the on-chip directory control unit of the first processor chip is further configured to instruct to read the first data block from a memory based on the identifier of the first data block, and store the first data block into the private cache of the first processor core;
the on-chip directory control unit of the first processor chip is further configured to create an on-chip directory entry for the first data block in the on-chip directory of the first processor chip, record an identifier of the first processor core into a core identifier list of a processor core storing the first data block, and set the on-chip unique identifier to true; and
the on-chip directory control unit of the first processor chip is further configured to instruct the inter-chip directory control unit to create an inter-chip directory entry corresponding to the first data block in the inter-chip directory, and record an identifier of the first processor chip into a chip identifier list of a processor chip storing the first data block.

With reference to the first or third possible implementation of the second aspect, in a fifth possible implementation, after the processor chip corresponding to the chip identifier receives the instruction message for deleting the first data block, an on-chip directory control unit of each processor chip is configured to find, in an on-chip directory storage unit of each processor chip based on the identifier of the first data block, an on-chip directory entry corresponding to the first data block, determine, from each on-chip directory entry corresponding to the first data block, a core identifier of a processor core storing the first data block, and instruct the processor core corresponding to the core identifier to delete the first data block from a private cache.

Based on the foregoing technical solutions, in the embodiments of the present invention, a hierarchical coherence directory is configured, that is, the inter-chip directory is configured in the multiple chip multiprocessor, and the on-chip directory is configured in each processor chip. In addition to the data block identifier and the core identifier list of the processor cores caching the data block, each entry in the on-chip directory includes the on-chip unique identifier. The on-chip unique identifier is used to record whether the data block corresponding to the entry is unique to the processor chip in the multiple chip multiprocessor. According to the foregoing method, when a cache coherence operation is performed, if it is determined that an on-chip unique identifier recorded in an on-chip directory entry corresponding to a data block is true, the coherence operation is performed only in the processor chip. Compared with the prior art that inter-chip communication is required for a write operation on any one data block, this method reduces overheads, thereby effectively reducing a delay and power consumption.

### BRIEF DESCRIPTION OF DRAWINGS

To describe the technical solutions in the embodiments of the present invention more clearly, the following briefly describes the accompanying drawings required for describing the embodiments of the present invention.
FIG. 1 is a schematic diagram of a multiple chip multiprocessor to which an embodiment of the present invention is applicable;
FIG. 2 is a schematic structural diagram of an inter-chip directory according to an embodiment of the present invention;
FIG. 3 is a schematic diagram of a data structure of an inter-chip directory entry according to an embodiment of the present invention;
FIG. 4 is a schematic structural diagram of an on-chip directory according to an embodiment of the present invention;
FIG. 5 is a schematic diagram of a data structure of an on-chip directory entry according to an embodiment of the present invention;
FIG. 6A is a schematic diagram of a hierarchical directory recording manner implemented by using an inter-chip directory and an on-chip directory according to an embodiment of the present invention;
FIG. 6B is a schematic diagram of a hierarchical directory access manner according to an embodiment of the present invention;
FIG. 7A is a schematic flowchart of a cache coherence operation method in a multiple chip multiprocessor system according to Embodiment 1 of the present invention;
FIG. 7B is a schematic flowchart of a cache coherence operation method in a multiple chip multiprocessor system according to Embodiment 2 of the present invention;
FIG. 7C is a schematic flowchart of a cache coherence operation method in a multiple chip multiprocessor system according to Embodiment 3 of the present invention;
FIG. 7D is a schematic flowchart of a cache coherence operation method in a multiple chip multiprocessor system according to Embodiment 4 of the present invention;
FIG. 8 is a schematic flowchart of a cache coherence operation method in a multiple chip multiprocessor system according to Embodiment 5 of the present invention;

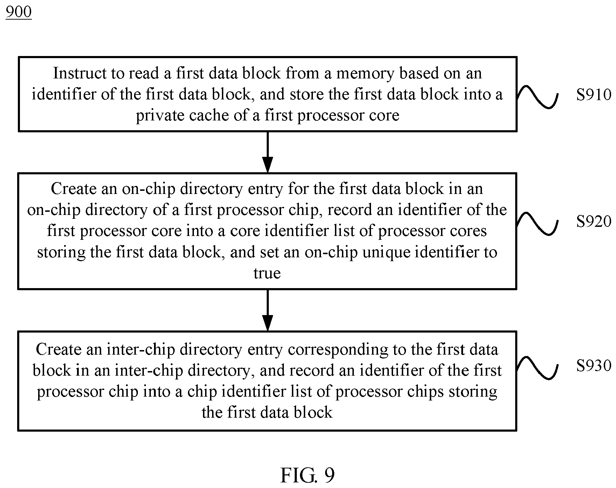

FIG. 9 is a schematic flowchart of a cache coherence operation method in a multiple chip multiprocessor system according to Embodiment 6 of the present invention; and
FIG. 10 is a schematic flowchart of a directory access method according to an embodiment of the present invention.

### DESCRIPTION OF EMBODIMENTS

The following clearly and completely describes the technical solutions in the embodiments of the present invention with reference to the accompanying drawings in the embodiments of the present invention.

In this specification, the term "multi-core processor" means a processor that includes a plurality of processor cores (Core), and may be specifically represented as a chip multiprocessor or a multiprocessor system-on-board. The chip multiprocessor is a processor (Processor) in which a plurality of processor cores (Core) are interconnected and integrated on a chip (Chip) by using a network on chip (Network On Chip, NOC). The multiprocessor system-on-board is a processing system built by packaging (Package) each of a plurality of processor cores as a processor and integrating all processors on a circuit board.

In this specification, the term "multiple chip multiprocessor" is a processor that includes at least two processor chips, each processor chip including at least two processor cores.

In this specification, the term "processor core", an abbreviation for "processor kernel" and also called a core, is a most important component of a CPU (Central Processing Unit). The processor core is made of monocrystalline silicon by using a specific production process. All computing, command reception or command storage, and data processing of the CPU are performed by the processor core. The term "multiprocessor core" means that at least two processor cores are included, and the "multiprocessor core" covers a prior-art application scope of a multi-core (Multi-Core) and many cores (Many Core).

In this specification, the term "private cache" is a cache space that is within a processor core and that is used to store private data of the processor core. In specific implementation, the private cache is usually a level-1 (Level 1) cache of a processor chip. In implementation of the multiple chip multiprocessor, the processor core reads some data blocks into the private cache, to improve efficiency of accessing the data blocks by the processor core.

In this specification, the term "multiple chip multiprocessor coherence operation" indicates that in the multiple chip multiprocessor, in order to maintain cache coherence of a data block in the multiple chip multiprocessor after a processor core of a processor chip initiates a write request for the data block, not only an on-chip cache coherence operation is required, that is, to delete the data block cached in a private cache of the processor core in the processor chip, but also an inter-chip cache coherence operation is required, that is, to delete the data block cached in a private cache of a processor core in another processor chip different from the foregoing processor chip in the multiple chip multiprocessor.

In this specification, the term "accessor" is a processor core or a processor chip that initiates an access request for a data block. The processor core that initiates the access request for the data block is called an access core, and the processor chip at which the access core is located is called an access chip. In an example, if three processor cores b1, b2, and b3 of a processor chip B have initiated an access request for accessing a data block a, there is a copy of the data block a in private caches of the three processor cores b1, b2, and b3. The processor cores b1, b2, and b3 are called access cores of the data block a, and the processor chip B is an access chip of the data block a.

In this specification, the term "data block" indicates a granularity at which each processor core accesses data in a multiprocessor system. In general implementation, because the data block is stored in a cache of the multiprocessor system, the data block is stored at a granularity of a cache line (namely, Cache line). A person of ordinary skill in the art can understand that the granularity of the data block may also have another manifestation form, for example, a part of a cache line or a plurality of cache lines. This is not limited in the embodiments in this specification. When a data block has been accessed by a plurality of processor cores, there are a plurality of copies of the data block that are stored in private caches of the plurality of processor cores.

In this specification, the term "inter-chip directory", also called an "inter-chip accessor directory", is a data structure used to record which processor chips access a data block cached in the multiple chip multiprocessor. The inter-chip directory includes at least one entry, each inter-chip directory entry is in one-to-one correspondence with each data block written into a private cache of a processor core in the multiple chip multiprocessor, and the entry records at least an identifier of a cached data block and a chip identifier list of access chips of the cached data block. In specific implementation, there are at least three implementations of the inter-chip directory. A first manner is to use a centralized cache implementation, that is, allocating a storage space independent of the cache of each processor chip in the multiple chip multiprocessor to store the inter-chip directory. A second manner is to use a distributed cache implementation, that is, dividing the inter-chip directory into a plurality of blocks, separately storing these directory blocks into caches of a plurality of processor chips in the multiple chip multiprocessor, and using an address portion of the cached data block corresponding to the directory entry as an index for accessing. A third manner is to use a memory implementation, that is, storing the inter-chip directory in a memory (Memory) and accessing the inter-chip directory through a memory controller (Memory Controller).

In this specification, the term "on-chip directory" is also called an "on-chip accessor directory", and each processor chip in the multiple chip multiprocessor includes an on-chip directory. The on-chip directory is a data structure used to record which processor cores in the processor chip access a data block cached in the processor chip. The on-chip directory includes at least one entry, each on-chip directory entry is in one-to-one correspondence with each data block written into a private cache of a processor core in the processor chip, and the entry records at least an identifier of a cached data block, a core identifier list of access cores of the cached data block, and an on-chip unique identifier. The on-chip unique identifier is used to identify whether the cached data block is unique to the processor chip in the multiple chip multiprocessor. In specific implementation, the on-chip directory is usually implemented in a cache manner and there are at least two implementations. A first manner is to use a centralized cache implementation, that is, allocating a storage space independent of caches of processor cores in the processor chip to store the on-chip directory. A second manner is to use a distributed cache implementation, that is, dividing the on-chip directory into a plurality of blocks, separately storing these directory blocks into internal caches of a plurality of processor cores in the processor chip, and using an address portion of the cached data block corresponding to the directory entry as an index for accessing.

In this specification, the term "data block identifier" indicates an identifier of a cached data block. Usually, high-order bits of an address of the cached data block are used as the identifier of the cached data block. To be specific, "tag+index" (which constitutes the high-order bits of the address of the cached data block) in the address of the cached data block is used as a unique identifier of the cached data block. Specifically, this may be specified in a preset manner.

In this specification, the term "chip identifier", namely "processor chip identifier", indicates a unique number of each processor chip in the multiple chip multiprocessor, and may be allocated and set by an administrator in advance. A numbering manner is not limited in this specification. In an example, numbering may be implemented in an order of natural numbers.

In this specification, the term "core identifier", namely "processor core identifier", indicates a unique number of a processor core in a processor chip, and may be allocated and set by the administrator in advance. A numbering manner is not limited in this specification. In an example, numbering may be implemented in an order of natural numbers.

In this specification, the term "shared cache" is a cache space, used for storing shared data of a plurality of cores, inside a processor chip. An implementation of the shared cache is divided into a centralized implementation and a distributed implementation. The former is to set a cache space independent of processor cores inside the processor chip as the shared cache, and each processor core may access the independent shared cache. The latter is to allocate a cache space in each processor core of the processor chip, and use a "physically distributed and logically unified" cache space including the cache space of each processor core as the shared cache. In specific implementation, the shared cache is usually a level-2 (Level 2) cache or a level-3 (Level 3) cache in the processor system.

### Multiple Chip Multiprocessor Structure

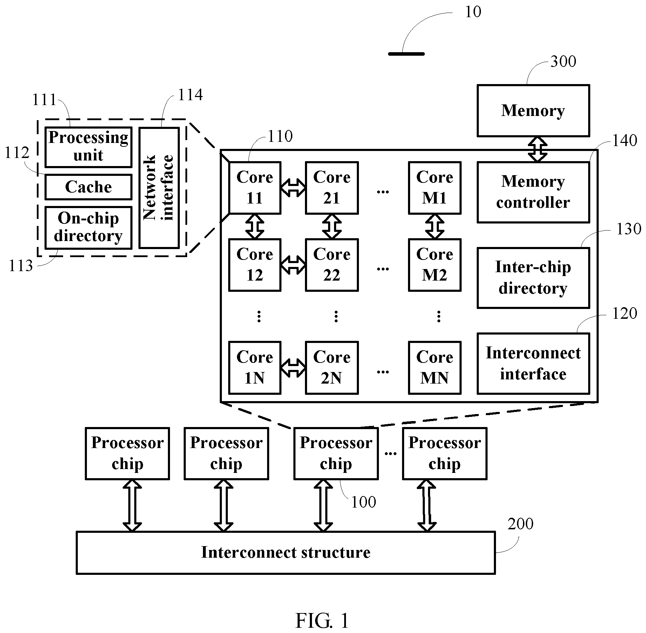

FIG. 1 is a schematic structural diagram of a multiple chip multiprocessor to which an embodiment of the present invention is applicable;

As shown in FIG. 1, a multiple chip multiprocessor 10 includes a plurality of processor chips and an interconnect structure 200. The plurality of processor chips are connected by the interconnect structure (Interconnect) 200, and the interconnect structure 200 may be implemented in a variety of manners, for example, a bus (Bus).

An internal structure of the processor chip is described by using a processor chip 100 as an example. The processor chip 100 includes a plurality of processor cores (a core 11, ..., and a core MN in FIG. 1), an interconnect interface (Interconnect Interface) 120, an inter-chip directory 130, and a memory controller 140. The plurality of processor cores are connected by using a network-on-chip. The network-on-chip is mainly based on an electronic or optical technology, called an electrical network-on-chip (Electrical Network-on-Chip, ENoC) and an optical network-on-chip (Optical Network-on-Chip, ONoC), respectively. This part of technology is a well-known technology in the art, and details are not described in this embodiment of the present invention.

The interconnect interface 120 serves as an interface of the processor chip 100, and the processor chip 100 is connected to the interconnect structure 200 by using the interface.

The inter-chip directory 130 is configured to record information about processor chips that access data blocks written into a private cache of a processor core in the multiple chip multiprocessor 10 (for example, the information includes at least related information such as an identifier of a cached data block and an identifier of an access chip of the cached data block).

The memory controller 140 is integrated inside the processor chip and is configured to connect a memory 300 and control access to the memory 300. It should be noted that the memory controller 140 is a non-mandatory component in the processor chip of the multiple chip multiprocessor. Integrating the memory controller 140 into the processor chip conforms to a design trend of improving an integration level of a system on chip (System On Chip, SOC). A person skilled in the art can understand that the memory controller 140 may alternatively be disposed outside the processor chip and exist independent of the processor chip.

### Inter-Chip Directory Structure

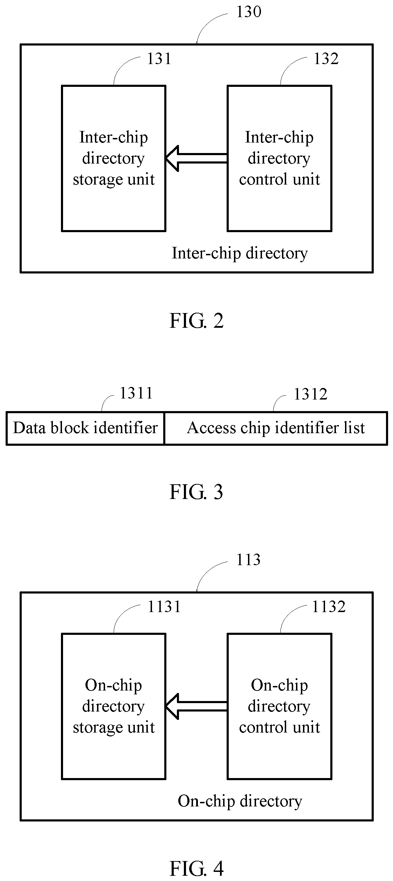

An inter-chip directory structure is shown in FIG. 2. An inter-chip directory 130 includes an inter-chip directory storage unit 131 and an inter-chip directory control unit 132.

The inter-chip directory storage unit 131 stores a plurality of inter-chip directory entries, and each inter-chip directory entry is in one-to-one correspondence with each data block written into a private cache of a processor core in a multiple chip multiprocessor.

The inter-chip directory control unit 132 is configured to control an operation on the inter-chip directory entries stored in the inter-chip directory storage unit 131, including but not limited to: find, create, delete, modify, and the like.

For a data structure of the inter-chip directory entry, refer to FIG. 3. The inter-chip directory entry includes an identifier 1311 of the data block written into the private cache of the processor core and an access chip identifier list 1312 of the data block.

An inter-chip directory stored by the processor chip 100 has at least the following three implementations. For these implementations, a specific implementation process is selected based on a requirement. This is not limited in the embodiments of the present invention.
(1) Implementation by using a centralized cache: To be specific, a storage space independent of a cache of each processor chip in the multiple chip multiprocessor is allocated as the inter-chip directory storage unit 131, or a storage space in a cache of a processor chip is allocated as the inter-chip directory storage unit 131, and a logic control circuit is disposed in the inter-chip directory storage unit 131 as the inter-chip directory control unit 132.
(2) Implementation by using a distributed cache: To be specific, the inter-chip directory is divided into several blocks, and these directory blocks are stored as a cache directory (Cache Directory) into caches of a plurality of processor chips in the multiple chip multiprocessor. High-order bits of an address of a cached data block usually include a tag and an index, and "tag+index" (which constitutes the high-order bits of the address of the cached data block) in the address of the cached data block is used as a unique identifier of the cached data block. In an inter-chip directory entry of each cached data block, the index and the tag of the address of the cached data block are set in the inter-chip directory entry. When the inter-chip directory entry is accessed, a position of the inter-chip directory entry corresponding to the cached data block is determined by using the index and the tag. A process of determining the position of the inter-chip directory entry by using the index and the tag is to be described in detail in subsequent embodiments. For example, assuming that a multiple chip multiprocessor system includes 16 processor chips, the inter-chip directory may be divided into 16 parts, and the 16 parts are stored in the 16 processor chips, respectively.
(3) Implementation by using a memory: To be specific, a part of storage space in a memory is allocated as the inter-chip directory storage unit 131, the inter-chip directory is stored in the memory, and the inter-chip directory is accessed and controlled by using a memory controller (serving as the inter-chip directory control unit 132).

### Internal Structure of a Processor Core

With reference to FIG. 1, the internal structure of the processor core is described by using a processor core 110 as an example. The processor core 110 includes:
a processing unit 111, configured to process data;
a cache 112, usually acting as a private cache for the processor core, configured to store a data block frequently accessed by the processor core 110;
an on-chip directory 113, configured to record information about processor cores that access a data block stored in a private cache of a processor core in the processor chip 100 (that is, information about an access core of a cached data block in the processor chip 100, where the information about the access core may include at least a core identifier of the access core); and
a network interface 114, configured to act as an interface for connecting the processor core 110 to a network-on-chip in the processor chip 100.

### On-Chip Directory Structure

In specific implementation, as shown in FIG. 4, an on-chip directory 113 includes an on-chip directory storage unit 1131 and an on-chip directory control unit 1132.

The on-chip directory storage unit 1131 stores a plurality of on-chip directory entries, and each on-chip directory entry is in one-to-one correspondence with each data block written into a private cache of a processor core in a processor chip.

The on-chip directory control unit 1132 is configured to control an operation on the on-chip directory entries stored in the on-chip directory storage unit 1131, such as find, create, delete, or modify.

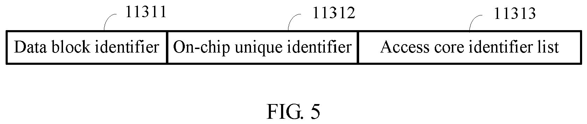

For a data structure of the on-chip directory entry, refer to FIG. 5. The on-chip directory entry includes an identifier 11311 of the data block written into the private cache of the processor core, an on-chip unique identifier 11312, and an access core identifier list 11313 of the data block.

In FIG. 1, an on-chip directory stored in the processor core 110 has at least the following two implementations. For these implementations, specific implementation is selected based on a requirement. This is not limited in the embodiments of the present invention.
(1) Implementation by using a centralized cache: To be specific, a storage space independent of a cache of each processor core in the processor chip 100 is allocated as the on-chip directory storage unit 1131, or a storage space in a cache of a processor core in the processor chip 100 is allocated as the on-chip directory storage unit 1131, and a control circuit is disposed in the on-chip directory storage unit 1131 as the on-chip directory control unit 1132.
(2) Implementation by using a distributed cache: To be specific, the on-chip directory is divided into several blocks, and these directory blocks are stored as a cache directory (Cache Directory) into caches of a plurality of processor cores in the processor chips in the multiple chip multiprocessor. High-order bits of an address of a cached data block usually include a tag and an index, and "tag+index" (which constitutes the high-order bits of the address of the cached data block) in the address of the cached data block is used as a unique identifier of the cached data block. In an on-chip directory entry of each cached data block, the index and the tag of the address of the cached data block are set in the on-chip directory entry. When the on-chip directory entry is accessed, a position of the on-chip directory entry corresponding to the cached data block is determined by using the index and the tag. A process of determining the position of the on-chip directory entry by using the index and the tag is to be described in detail in subsequent embodiments. For example, assuming that a multiprocessor system includes 128 processor cores, the on-chip directory may be divided into 128 parts, and the 128 parts are stored in the 128 processor cores, respectively.

### Hierarchical Directory Recording Manner and Hierarchical Directory Access Manner

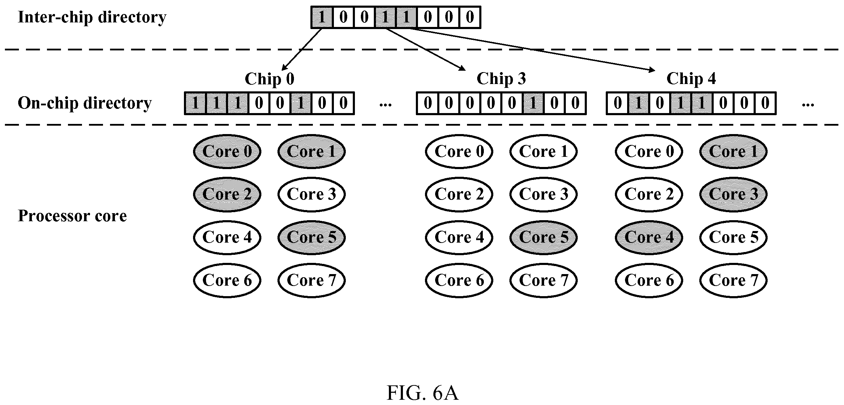

A hierarchical directory recording manner implemented by using an inter-chip directory and an on-chip directory is shown in FIG. 6A. In FIG. 6A, a multiple chip multiprocessor includes eight processor chips, and each processor chip includes eight processor cores. Information about an access chip of a data block and information about an access core in a corresponding access chip are separately recorded by using a vector. A vector of the inter-chip directory identifies a status of an access chip of the data block. Each bit in the vector records whether each processor chip is an access chip of the data block (the bits identify statuses of a chip 0 to a chip 7 "from left to right"). A vector of the on-chip directory identifies a status of an access core of the data block. Each bit in the vector records whether each processor core is an access core of the data block (the bits identify statuses of a core 0 to a core 7 "from left to right"). In order to more clearly identify the access chip and the access core of the data block, a color is used for distinguishing. In FIG. 6A, a gray bit records 1 and a white bit records 0.

A data block 1 is used as an example. Referring to FIG. 6A, based on an inter-chip directory entry corresponding to the data block 1, it can be learned that [chip 0, chip 3, chip 4] are access chips of the data block 1. Based on an on-chip directory entry corresponding to the data block 1, it can be learned that in an on-chip directory entry of the chip 0, [core 0, core 1, core 2, core 5] are access cores of the data block 1; in an on-chip directory entry of the chip 3, [core 5] is an access core of the data block 1; and in an on-chip directory entry of the chip 4, [core 1, core 3, core 4] are access cores of the data block 1. It can be learned from the foregoing that an access chip and an access core of a data block can be clearly described in this hierarchical directory recording manner.

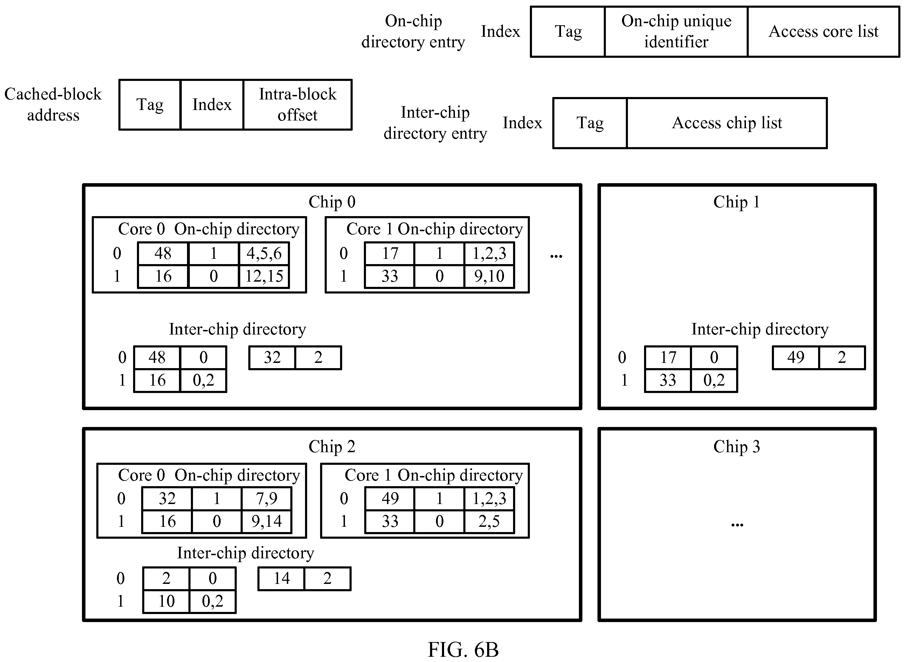

For the hierarchical directory access manner, refer to FIG. 6B. In FIG. 6B, the on-chip directory and the inter-chip directory are implemented by using a cache. Each on-chip directory entry and each inter-chip directory entry are recorded by using an entry of a cache directory, and an address of each cached data block includes: a tag, an index, and an intra-block offset. Correspondingly, the on-chip directory is stored in a cache directory manner. Each on-chip directory entry records the tag in the address of the cached data block, an on-chip unique identifier indicating whether the cached data block is unique to the processor chip, and an access core list of the cached data block. The inter-chip directory is also stored in the cache directory manner. Each inter-chip directory entry records the tag in the address of the cached data block and an access chip list of the cached data block.

In an example, a multiple chip multiprocessor shown in FIG. 6B includes four processor chips, and each processor chip includes 16 processor cores. An inter-chip directory is cached in each processor chip in a distributed manner, and an on-chip directory of each processor chip is also cached in each processor core in a distributed manner. In specific implementation, the on-chip directory and the inter-chip directory include a very large quantity of entries. As an illustration, only a portion of the on-chip directory and a portion of the inter-chip directory are shown in FIG. 6B.

In an on-chip directory stored in a core 0 of a chip 0, content of a first directory entry is [48:1:(4,5,6)], an index of the entry is 0 (as indicated before the entry), and a tag of a cached data block corresponding to the entry is 48, that is, the tag 48 and the index 0 are spliced to constitute high-order bits of an address of the cached data block corresponding to the directory entry. The high-order bits of the address of the cached data block are unique, and therefore can be used to uniquely identify the cached data block. In addition, it can be learned that an on-chip unique identifier of the on-chip directory entry is 1, and therefore the data is unique to the chip 0. The next (4,5,6) indicates that the cached data block is stored in private caches of processor cores numbered 4, 5, and 6 in the chip 0.

In an inter-chip directory stored in the chip 0, it can be learned that an inter-chip directory entry of a cached data block with a tag 48 in a processor core 0 in the chip 0 has entry content [48:0]. In the entry content, an index is 0, and an access chip list includes only 0, indicating that the cached data block with the tag 48 is stored only in the chip 0.

The following uses an illustrative example to describe how to determine storage positions of an inter-chip directory entry and an on-chip directory entry by using a tag and an index of a cached data block. There are 16 cores in a processor chip, and therefore it is assumed that an on-chip directory entry of a cached data block with a tag 16*n (n is an integer, and n≥0) is stored in a core 0, and an on-chip directory entry of a cached data block with a tag 16*n+1 (n is an integer, and n≥0) is stored in a core 1, and so on. It can be deduced that: an on-chip directory entry of a cached data block with a tag 16*n+m (n is an integer, n≥0, m is an integer, and 0≤m≤15) is stored in a core m (m is an integer, and 0≤m≤15).

The multiple chip multiprocessor system has four chips, and therefore it is assumed that an on-chip directory entry of a cached data block with a tag 4*s (s is an integer, and s≥0) is stored in a chip 0, an on-chip directory entry of a cached data block with a tag 4*s+1 (s is an integer, and s≥0) is stored in a chip 1, and so on It can be deduced that: an on-chip directory entry of a cached data block with a tag 4*s+t (s is an integer, s≥0, t is an integer, and 0≤t≤3) is stored in a chip t (t is an integer and 0≤t≤3).

For further deduction by analog, in the foregoing manner, for a multiple chip multiprocessor including n processor chips, where each processor chip includes M cores, if a tag of a cached data block is T, a processor chip number stored in an inter-chip directory entry of the cached data block may be obtained through a modulo operation (Modulo Operation), that is, T MOD N (which means finding a remainder of dividing T by N). A processor core number stored in an on-chip directory entry of the cached data block may also be obtained through a modulo operation, that is, T MOD M (which means finding a remainder of dividing T by M).

### Embodiments of a Cache Coherence Operation Method in a Multiple Chip Multiprocessor

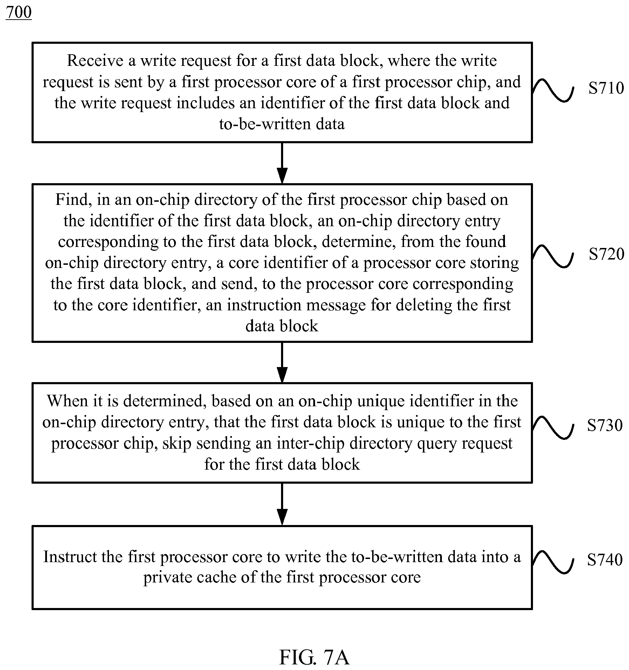

FIG. 7A is a schematic flowchart of a cache coherence operation method 700 in a multiple chip multiprocessor system according to an embodiment of the present invention. The method is applicable to a hardware architecture of the multiple chip multiprocessor shown in FIG. 1.
S710: Receive a write request for a first data block, where the write request is sent by a first processor core of a first processor chip, and the write request includes an identifier of the first data block and to-be-written data.

This step is performed by an on-chip directory control unit of the first processor chip. After receiving the write request for the first data block, the on-chip directory control unit obtains the identifier of the first data block from the write request. The write request for the first data block includes an address of the first data block, and the identifier of the first data block may be denoted by using selected high-order bits of the address of the data block. Using FIG. 6B as an example, if the address of the data block includes a tag, an index, and an intra-block offset, "tag+index" of the address of the data block may be used as the identifier of the data block.
S720: Find, in an on-chip directory of the first processor chip based on the identifier of the first data block, an on-chip directory entry corresponding to the first data block, determine, from the found on-chip directory entry, a core identifier of a processor core storing the first data block, and send, to the processor core corresponding to the core identifier, an instruction message for deleting the first data block.

After obtaining the identifier of the first data block, the on-chip directory control unit of the first processor chip determines, by querying an on-chip directory storage unit based on the identifier of the first data block, the on-chip directory entry corresponding to the first data block, determines, from the determined on-chip directory entry, the core identifier of the processor core caching the first data block, and sends, to the processor core, the instruction message for deleting the first data block. After receiving the instruction message, the processor core deletes the first data block from a private cache.
S730: When it is determined, based on an on-chip unique identifier in the on-chip directory entry, that the first data block is unique to the first processor chip, skip sending an inter-chip directory query request for the first data block.

In an example of specific implementation, when it is determined, based on the on-chip unique identifier in the on-chip directory entry corresponding to the first data block, that the identifier is true, the on-chip directory control unit determines that the first data block is unique to the first processor chip, and the on-chip directory control unit of the first processor chip skips sending an inter-chip directory entry query request to an inter-chip directory control unit.
S740: Instruct the first processor core to write the to-be-written data into a private cache of the first processor core.

After receiving the to-be-written data, the first processor core writes the to-be-written data into the private cache of the first processor core.

From the foregoing embodiment, it can be learned that the on-chip unique identifier is set in the on-chip directory entry, and the on-chip unique identifier records whether the data block corresponding to the entry is unique to the processor chip in the multiple chip multiprocessor. According to the foregoing method, during a coherence operation process, when it is determined that an on-chip unique identifier recorded in an on-chip directory entry corresponding to a data block is true, a cache coherence operation is performed only in the processor chip. Compared with the prior art that inter-chip communication is required for a write operation on any one data block, this method reduces overheads, thereby effectively reducing a delay and power consumption.

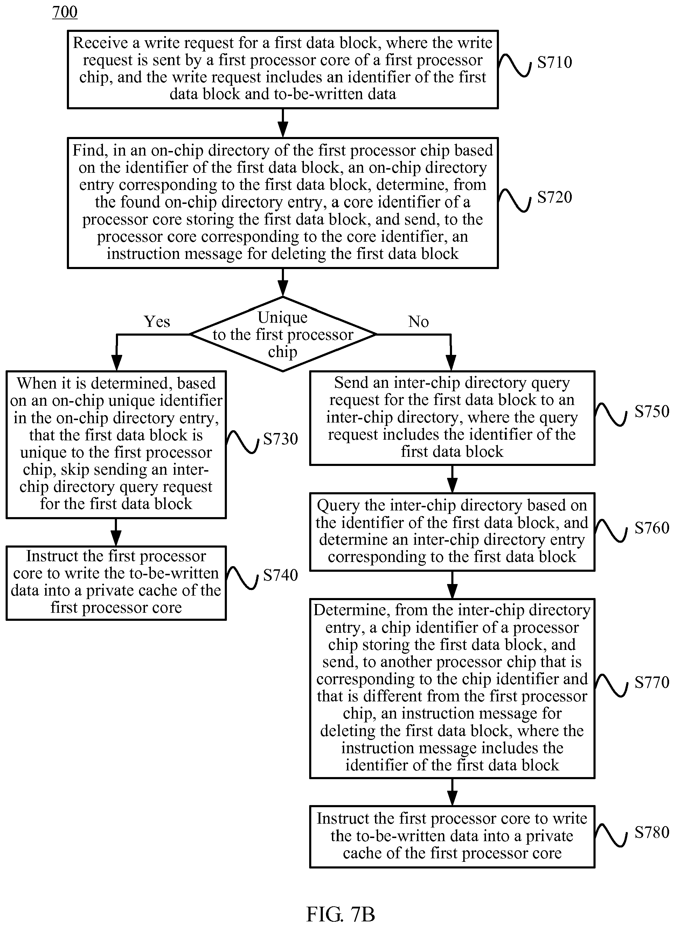

Further, when it is determined, based on the on-chip unique identifier in the on-chip directory entry, that the first data block is not unique to the first processor chip, referring to FIG. 7B, the cache coherence operation method further includes the following steps.
S750: Send an inter-chip directory query request for the first data block to an inter-chip directory, where the query request includes the identifier of the first data block.

When it is determined that the on-chip unique identifier is false (indicating that the first data block is not unique to the first processor chip), the on-chip directory control unit of the first processor chip sends the inter-chip directory query request to the inter-chip directory control unit, where the request carries the identifier of the first data block, and the identifier of the first data block may be obtained from the address of the data block.
S760: Query the inter-chip directory based on the identifier of the first data block, and determine an inter-chip directory entry corresponding to the first data block.

After receiving the query request, the inter-chip directory control unit queries entries in an inter-chip directory storage unit based on the identifier of the first data block, to determine the inter-chip directory entry corresponding to the first data block.
S770: Determine, from the inter-chip directory entry, a chip identifier of a processor chip storing the first data block, and send, to another processor chip that is corresponding to the chip identifier and that is different from the first processor chip, an instruction message for deleting the first data block, where the instruction message includes the identifier of the first data block.

In an example of specific implementation, after determining, from the inter-chip directory entry corresponding to the first data block, the chip identifier of the processor chip storing the first data block, the inter-chip directory control unit sends, to another processor chip (different from the first processor chip) corresponding to the chip identifier, the instruction message for deleting the first data block.
S780: Instruct the first processor core to write the to-be-written data into a private cache of the first processor core.

In an example of specific implementation, after sending the instruction message for deleting the first data block, the on-chip directory control unit of the first processor chip sends an indication message to the first processor core, so that the first processor core writes the to-be-written data into the private cache of the first processor core.

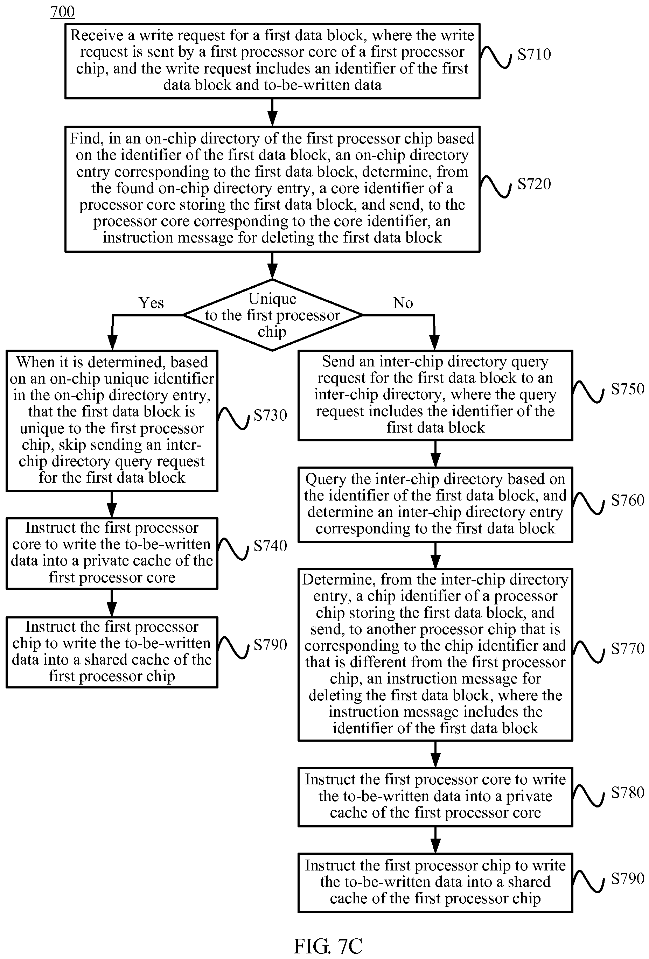

Further, after S740 and S780, referring to FIG. 7C, the method embodiment further includes the following step.
S790: Instruct the first processor chip to write the to-be-written data into a shared cache of the first processor chip.

In this step, a write through mode (Write Through) in a cache write-back mechanism is used. The on-chip directory control unit of the first processor chip sends the indication message to the first processor chip, so that the to-be-written data is written into the shared cache of the first processor chip.

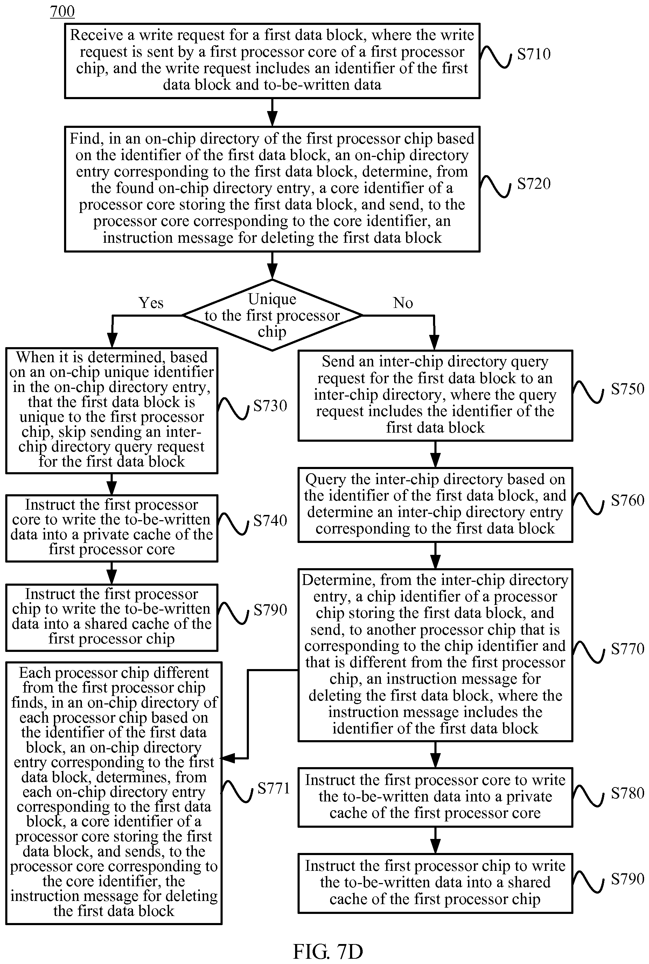

Further, after the another processor chip different from the first processor chip receives the instruction message for deleting the first data block, referring to FIG. 7D, the method embodiment further includes the following step.
S771: Each processor chip different from the first processor chip finds, in an on-chip directory of each processor chip based on the identifier of the first data block, an on-chip directory entry corresponding to the first data block, determines, from each on-chip directory entry corresponding to the first data block, a core identifier of a processor core storing the first data block, and sends, to the processor core corresponding to the core identifier, the instruction message for deleting the first data block.

An on-chip directory control unit of each processor chip that receives the instruction message for deleting the first data block finds, in an on-chip directory storage unit of each processor chip based on the identifier of the first data block, an on-chip directory entry corresponding to the first data block, determines, from the on-chip directory entry, the core identifier of the processor core caching the first data block, and sends, to a private cache of the processor core corresponding to the core identifier, the instruction message for deleting the first data block, so that the processor core deletes the first data block stored in the private cache.

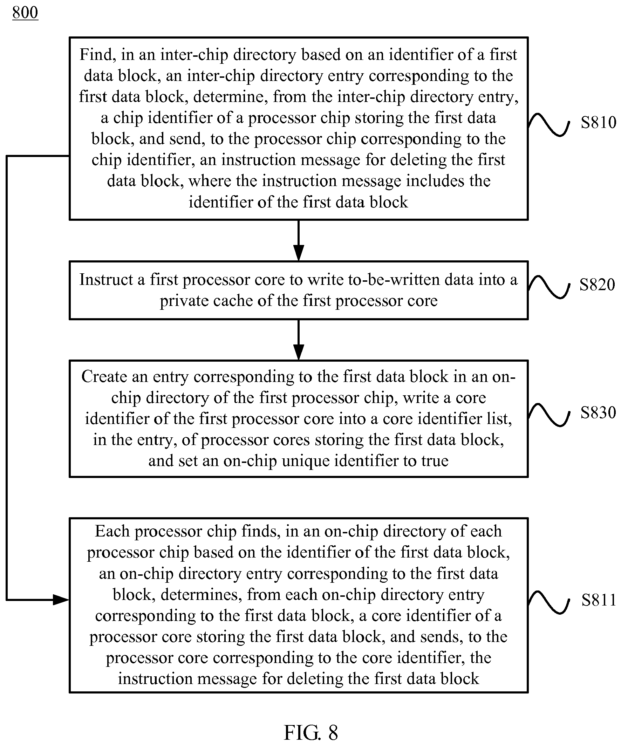

In another case, that is, when an entry corresponding to the first data block cannot be found in the on-chip directory of the first processor chip based on the identifier of the first data block, and an entry corresponding to the identifier of the first data block is found in the inter-chip directory based on the identifier of the first data block, refer to FIG. 8.
S810: Find, in the inter-chip directory based on the identifier of the first data block, an inter-chip directory entry corresponding to the first data block, determine, from the inter-chip directory entry, a chip identifier of a processor chip storing the first data block, and send, to the processor chip corresponding to the chip identifier, an instruction message for deleting the first data block, where the instruction message includes the identifier of the first data block.

When the on-chip directory control unit of the first processor chip cannot find the entry corresponding to the first data block in the on-chip directory of the first processor chip, but finds the entry corresponding to the first data block in the inter-chip directory, the on-chip directory control unit of the first processor chip sends an indication message to the inter-chip directory control unit, to instruct the inter-chip directory control unit to query the inter-chip directory based on the identifier of the first data block to determine an inter-chip directory entry corresponding to the first data block, so as to determine an identifier of an access chip of the first data block, and send, to the access chip, an instruction message for deleting the first data block, so that the access chip deletes the cached first data block.
S820: Instruct the first processor core to write the to-be-written data into the private cache of the first processor core.

After sending the instruction message for deleting the first data block, the on-chip directory control unit of the first processor chip sends an indication message to the first processor core, so that the first processor core writes the to-be-written data into the private cache of the first processor core.
S830: Create an entry corresponding to the first data block in the on-chip directory of the first processor chip, write a core identifier of the first processor core into a core identifier list, in the entry, of a processor core storing the first data block, and set the on-chip unique identifier to true.

The on-chip directory control unit of the first processor chip creates the entry corresponding to the first data block in the on-chip directory of the first processor chip, writes the core identifier of the first processor core into the core identifier list, in the entry, of the a processor core storing the first data block, and sets the on-chip unique identifier to true.

Further, after the processor chip corresponding to the chip identifier receives the instruction message for deleting the first data block, the method embodiment further includes the following step.
S811: Each processor chip finds, in an on-chip directory of each processor chip based on the identifier of the first data block, an on-chip directory entry corresponding to the first data block, determines, from each on-chip directory entry corresponding to the first data block, a core identifier of a processor core storing the first data block, and sends, to the processor core corresponding to the core identifier, the instruction message for deleting the first data block.

The on-chip directory control unit of each processor chip that receives the instruction message for deleting the first data block finds, in an on-chip directory storage unit of each processor chip based on the identifier of the first data block, an on-chip directory entry corresponding to the first data block, determines, from the on-chip directory entry, the core identifier of the processor core caching the first data block, and sends, to a private cache of the processor core corresponding to the core identifier, the instruction message for deleting the first data block, so that the processor core deletes the first data block stored in the private cache.

In another case, that is, when an entry corresponding to the first data block cannot be found in the on-chip directory of the first processor chip based on the identifier of the first data block, and the entry corresponding to the first data block cannot be found in the inter-chip directory based on the identifier of the first data block, the following steps are performed.
S910: Instruct to read the first data block from a memory based on the identifier of the first data block, and store the first data block into the private cache of the first processor core.

When the entry corresponding to the first data block cannot be found in both the on-chip directory and the inter-chip directory of the first processor chip, it indicates that the first data block does not exist in the multiple chip multiprocessor. In this case, the first processor chip needs to read the first data block from the memory based on the identifier of the first data block, and store the first data block into the private cache of the first processor core.
S920: Create an on-chip directory entry for the first data block in the on-chip directory of the first processor chip, record an identifier of the first processor core into a core identifier list of a processor core storing the first data block, and set the on-chip unique identifier to true.

The on-chip directory control unit of the first processor chip creates the on-chip directory entry for the first data block in the on-chip directory of the first processor chip, records the identifier of the first processor core into the core identifier list of the processor core storing the first data block, and sets the on-chip unique identifier to true, that is, setting the first data block to be unique to the first processor chip in the multiple chip multiprocessor.
S930: Create an inter-chip directory entry corresponding to the first data block in the inter-chip directory, and record an identifier of the first processor chip into a chip identifier list of a processor chip storing the first data block.

The on-chip directory control unit of the first processor chip instructs the inter-chip directory control unit to create the inter-chip directory entry corresponding to the first data block in the inter-chip directory, and record the identifier of the first processor chip into the chip identifier list of the a processor chip storing the first data block.

The following describes in detail a cache coherence operation method according to an embodiment of the present invention by using an example.

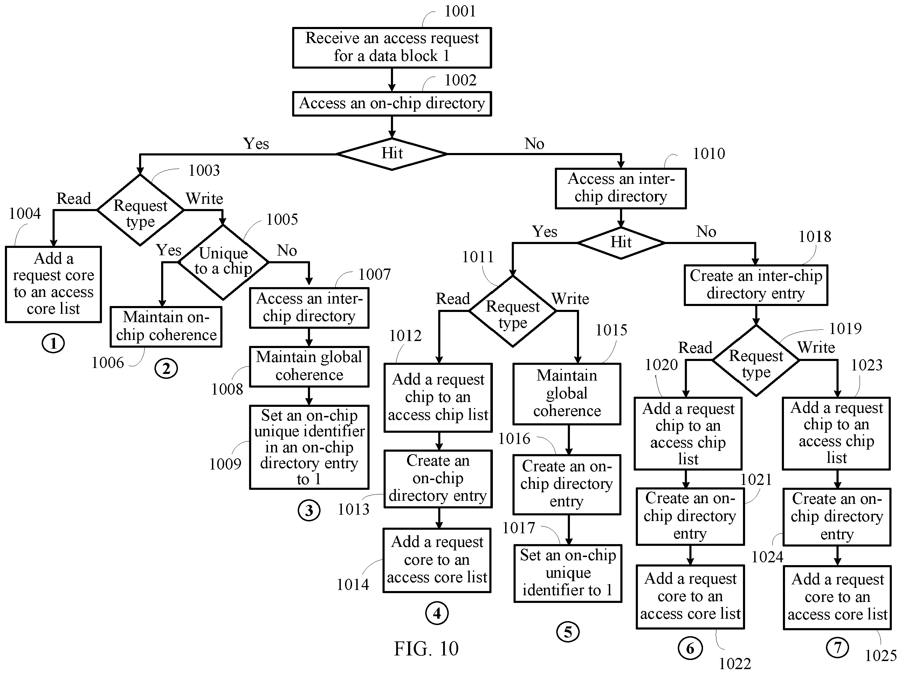

FIG. 10 is a schematic flowchart of a directory (including an on-chip directory and an inter-chip directory) access method according to another embodiment of the present invention. With reference to a compositional structure of the multiple chip multiprocessor shown in FIG. 1, an example in which a core 11 of a processor chip 100 initiates an access request (a read request or a write request) message is used for description.
1001: Receive an access request for a data block 1.

The access request for the data block 1 carries an address of the to-be-accessed data block.
1002: A request core accesses an on-chip directory based on an identifier of the to-be-accessed data block. If an on-chip directory entry is hit, perform 1003; if no on-chip directory entry is hit, perform 1010.

The request core is a processor core that initiates a read request or a write request. In an example, the request core may be a core 11 in FIG. 1. The on-chip directory is an on-chip directory of a processor chip to which the processor core initiating a request belongs, and is used to record data blocks stored in a private cache of each processor core in the processor chip and information about access cores of these data blocks. An example is the on-chip directory 113 of the processor chip 100 in FIG. 1. Composition of the on-chip directory is shown in FIG. 4. Hitting an on-chip directory entry means finding, based on an identifier of a to-be-accessed data block, an on-chip directory entry corresponding to the identifier. In an example, a specific data structure of the on-chip directory entry is shown in FIG. 5.
1003: Determine whether a request type is a read request or a write request, and if the request type is a read request, perform 1004; if the request type is a write request, perform 1005.

The read request or the write request is identified by using a predefined field or bit in an access request message. In an example, a W/R bit is preset in the access request message to identify the request type. For example, when the bit is 1, it indicates a write request; when the bit is 0, it indicates a read request.
1004: If the request type is a read request, add the request core to an access core list in the on-chip directory entry.

For example, for the request core that sends the read request (that is, a processor core that sends the read request), a to-be-read data block is stored into a private cache of the request core, and an identifier of the request core needs to be recorded into an access core identifier list in an on-chip directory entry corresponding to the data block.
1005: If the request type is a write request, whether a data block corresponding to a write request address is unique to a chip needs to be determined. If the data block is unique to the chip, perform 1006; if the data block is not unique to the chip, perform 1007.

For the write request, whether the data block corresponding to the write request address is unique to the chip needs to be determined. With reference to a data structure of an on-chip directory entry shown in FIG. 5, an on-chip unique identifier 11312 is used to identify whether a corresponding data block is unique to the chip.
1006: When the data block corresponding to the write request address is unique to the chip, perform on-chip coherence maintenance on the data block.

Specifically, a process of on-chip coherence maintenance is to determine, based on the access core identifier list stored in the on-chip directory entry, a processor core with a private cache storing the data block, and send an instruction message for deleting the data block, so that the processor core deletes the data block from the private cache.
1007: When the data block corresponding to the write request address is not unique to the chip, access an inter-chip directory.

For example, an on-chip directory control unit in FIG. 4 may send an inter-chip directory access request, where the access request carries the identifier of the data block. An inter-chip directory entry corresponding to the data block is found in the inter-chip directory, an access chip identifier list of the data block is determined based on a data structure of an inter-chip directory entry shown in FIG. 3, and then global coherence maintenance is performed on the data block corresponding to the write request address.
1008: Perform global coherence maintenance on the data block corresponding to the write request address.

For global coherence maintenance, the inter-chip directory needs to be queried based on the identifier of the data block corresponding to the write request address, to determine an access chip; an on-chip directory entry of each access chip is queried based on the identifier of the data block, to determine an access core; the instruction message for deleting the data block is sent to the access core, to delete the cached data block from a private cache of the access core; and then to-be-written data is written into the private cache of the request core.

Using FIG. 6A as an example, [chip 0, chip 3, chip 4] are determined as access chips of the data block 1. Based on an on-chip directory entry corresponding to the data block 1, it can be learned that in an on-chip directory entry of the chip 0, [core 0, core 1, core 2, core 5] are access cores of the data block 1; in an on-chip directory entry of the chip 3, [core 5] is an access core of the data block 1; and in an on-chip directory entry of the chip 4, [core 1, core 3, core 4] are access cores of the data block 1. Performing global coherence maintenance on the data block 1 is deleting the data block 1 from private caches of the access cores of the data block 1.
1009: After global coherence maintenance is completed, set an on-chip unique identifier in the on-chip directory entry corresponding to the data block to 1.

For example, in this embodiment, one bit is used as the on-chip unique identifier. When a value of the identifier is 1, it indicates that the data block is unique to the chip; when a value of the identifier is 0, it indicates that the data block is not unique to the chip.
1010: When there is no hit in accessing the on-chip directory, the inter-chip directory needs to be accessed to determine whether there is a hit. If there is a hit, perform 1011; if there is no hit, perform 1018.

A hierarchical directory structure is used in this embodiment, that is, each processor chip includes an on-chip directory, and an entire multiple chip multiprocessor system includes an inter-chip directory. When no corresponding entry is found in the on-chip directory of the processor chip at which the access core is located, the inter-chip directory needs to be queried, to check whether another processor chip acts as the access chip of the to-be-accessed data block.
1011: Determine whether an access request type is a read request or a write request, and if the access request type is a read request, perform 1012; if the access request type is a write request, perform 1015.

For example, the read request or the write request is identified by using a predefined field or bit in a request message.
1012: When it is determined that the access request is a read request, add an identifier of a processor chip at which the request core sending the read request is located to an access chip list of the data block corresponding to the read request.

The request core (corresponding to the processor core) sending the read request adds the identifier of the chip at which the request core is located to the access chip list in the inter-chip directory entry.
1013: Create an on-chip directory entry.

Because no directory entry of the data block corresponding to the write request is hit in the on-chip directory, an on-chip directory entry corresponding to the data block needs to be created in the on-chip directory of the chip at which the request core is located.
1014: Add the request core to an access core list.

The identifier of the request core (that is, the processor core that sends the request) is added to the access core identifier list in the created on-chip directory entry.
1015: When a read/write type is determined to be a write request in step 1011, perform global coherence maintenance.

A process of global coherence maintenance is similar to step 1008, and details are not described herein again.
1016: Create an on-chip directory entry.

An operation of creating the on-chip directory entry is similar to step 1012, and details are not described herein again.
1017: Set an on-chip unique identifier in the on-chip directory entry corresponding to the data block to 1.

An operation of setting the on-chip unique identifier to 1 is similar to step 1009, and details are not described herein again.
1018: When there is no hit in querying the inter-chip directory based on the to-be-accessed data block, create an inter-chip directory entry.

The inter-chip directory entry for the to-be-accessed data block is created in the inter-chip directory. In an example, the created inter-chip directory entry uses a data structure shown in FIG. 3.
1019: After the inter-chip directory entry is created for the to-be-accessed data block, whether a request type is read or write needs to be further determined. If the request type is a read request, perform 1020; if the request type is a write request, perform 1023.

In an example, the read request or the write request is identified by using a predefined field or bit in an access request message. In an example, a W/R bit is preset in the access request message to identify the request type. For example, when the bit is 1, it indicates a write request; when the bit is 0, it indicates a read request.
1020: When it is determined that the request type is a read request, add a chip at which a core sending the read request is located (that is, the request chip) to an access chip list.

This step is similar to an implementation in step 1012, and details are not described herein again.
1021: Create an on-chip directory entry.

This step is similar to an implementation in step 1013, and details are not described herein again.
1022: Add an identifier of the request core to an access core list.

This step is similar to an implementation in step 1014, and details are not described herein again.
1023: Add a request chip to an access chip list.

An execution process of this step is consistent with that of step 1012, and details are not described herein again.
1024: Create an on-chip directory entry.

An execution process of this step is consistent with that of step 1013, and details are not described herein again.
1025: Add a request core to an access core list.

An execution process of this step is consistent with that of step 1014, and details are not described herein again.

### Multiple Chip Multiprocessor Embodiment

An embodiment of the present invention further provides a multiple chip multiprocessor capable of improving cache coherence processing efficiency. As shown in FIG. 1, with reference to FIG. 2 to FIG. 5, a processor chip 100 and a core 11 in the processor chip 100 in FIG. 1 are used as an example. An on-chip directory cache 113 in the processor core 11 includes an on-chip directory storage unit 1131 and an on-chip directory control unit 1132. An inter-chip directory 130 includes an inter-chip directory storage unit 131 and an inter-chip directory control unit 132.

Each inter-chip directory entry stored in the inter-chip directory storage unit 131 is in one-to-one correspondence with each data block written into a private cache of a processor core in the multiple chip multiprocessor. Each inter-chip directory entry records an identifier 1311 of a data block and a chip identifier list 1312 of a processor chip storing the data block.

The on-chip directory cache 113 includes the on-chip directory storage unit 1131 and the on-chip directory control unit 1132. Each core includes a private cache used for caching a data block. Each on-chip directory entry stored in the on-chip directory storage unit 1131 is in one-to-one correspondence with each data block written into the private cache of the processor core in the processor chip. Each on-chip directory entry records the data block identifier 11311, an on-chip unique identifier 11312, and a core identifier list 11313 of the processor core storing the data block. The on-chip unique identifier 11312 is used to identify whether the data block is unique to the processor chip in the multiple chip multiprocessor.

The on-chip directory control unit 1132 in the core 11 receives a write request for a first data block, where the write request is sent by the processor core 11 of the processor chip 100, and the write request includes an identifier of the first data block and to-be-written data.

The on-chip directory control unit 1132 of the processor chip 100 finds, in the on-chip directory storage unit 1131 of the processor chip 100 based on the identifier of the first data block, an on-chip directory entry corresponding to the first data block, determines, from the found on-chip directory entry, a core identifier of a processor core storing the first data block, and sends, to the processor core corresponding to the core identifier, an instruction message for deleting the first data block.

When it is determined, based on the on-chip unique identifier in the on-chip directory entry, that the first data block is unique to the processor chip 100, the on-chip directory control unit 1132 of the processor chip 100 skips sending an inter-chip directory query request for the first data block to the inter-chip directory control unit 132.

The on-chip directory control unit 1132 of the processor chip 100 instructs the first processor core to write the to-be-written data into a private cache 112 of the first processor core.

When it is determined, based on the on-chip unique identifier 11312 in the on-chip directory entry, that the first data block is not unique to the processor chip 100,
the on-chip directory control unit 1132 of the processor chip 100 sends an inter-chip directory query request for the first data block to the inter-chip directory control unit 132, where the query request includes the identifier of the first data block.

The inter-chip directory control unit 132 queries, based on the identifier of the first data block, inter-chip directory entries stored in the inter-chip directory storage unit 131, to determine an inter-chip directory entry corresponding to the first data block.

The inter-chip directory control unit 132 determines, from the inter-chip directory entry, a chip identifier of a processor chip storing the first data block, and sends, to another processor chip that is corresponding to the chip identifier and that is different from the processor chip 100, an instruction message for deleting the first data block, where the instruction message includes the identifier of the first data block.

The on-chip directory control unit 1132 of the processor chip 100 instructs the processor core 11 to write the to-be-written data into a private cache 112 of the processor core 110.

After instructing the first processor core to write the to-be-written data into the private cache of the first processor core, the on-chip directory control unit 1132 of the processor chip 100 is further configured to instruct the processor chip 100 to write the to-be-written data into a shared cache of the processor chip 100.

When an entry corresponding to the first data block cannot be found in the on-chip directory storage unit 1131 of the processor chip 100 based on the identifier of the first data block, and the entry corresponding to the identifier of the first data block is found in the inter-chip directory storage unit 131 based on the identifier of the first data block, the on-chip directory control unit 1132 of the processor chip 100 is further configured to instruct the inter-chip directory control unit 132 to find, in the inter-chip directory storage unit 131 based on the identifier of the first data block, the inter-chip directory entry corresponding to the first data block, determine, from the inter-chip directory entry, the chip identifier of the processor chip storing the first data block, and send, to the processor chip corresponding to the chip identifier, an instruction message for deleting the first data block, where the instruction message includes the identifier of the first data block.

The on-chip directory control unit 1132 of the processor chip 100 is further configured to instruct the processor core 11 to write the to-be-written data into the private cache 112 of the processor core 11.

The on-chip directory control unit 1132 of the processor chip 100 is further configured to create an entry corresponding to the first data block in the on-chip directory storage unit 1131 of the processor chip 100, write a core identifier of the processor core 11 into a core identifier list, in the entry, of a processor core storing the first data block, and set the on-chip unique identifier to true.

When an entry corresponding to the first data block cannot be found in the on-chip directory storage unit 1131 of the processor chip 100 based on the identifier of the first data block, and an entry corresponding to the identifier of the first data block cannot be found in the inter-chip directory storage unit 131 based on the identifier of the first data block, the on-chip directory control unit 1132 of the processor chip 100 is further configured to instruct a memory controller 140 to read the first data block from a memory 300 based on the identifier of the first data block, and store the first data block into the private cache 112 of the processor core 11.

The on-chip directory control unit 1132 of the processor chip 100 is further configured to create an on-chip directory entry for the first data block in the on-chip directory storage unit 1131 of the processor chip 100, record the identifier of the first processor core into the core identifier list of a processor core storing the first data block, and set the on-chip unique identifier to true.

The on-chip directory control unit 1132 of the processor chip 100 is further configured to instruct the inter-chip directory control unit 132 to create an inter-chip directory entry corresponding to the first data block in the inter-chip directory storage unit 131, and record the identifier of the processor chip 100 into a chip identifier list of a processor chip storing the first data block.

After the processor chip corresponding to the chip identifier receives the instruction message for deleting the first data block, an on-chip directory control unit of each processor chip in the multiple chip multiprocessor is configured to find, in an on-chip directory of each processor chip based on the identifier of the first data block, an on-chip directory entry corresponding to the first data block, determine, from each on-chip directory entry corresponding to the first data block, a core identifier of a processor core storing the first data block, and instruct the processor core corresponding to the core identifier to delete the first data block from a private cache.

It should be noted that "first", "second", and the like mentioned in all the embodiments of the present invention are only used for ease of description and cannot be construed as limiting the scope of the entities.

A person of ordinary skill in the art may be aware that, the units and steps in the examples described with reference to the embodiments disclosed herein may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, a network device, or the like) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A multiple chip multiprocessor cache coherence operation method, wherein amultiple chip multiprocessor comprises at least two processor chips and an inter-chip directory, each entry of the inter-chip directory is in one-to-one correspondence with each data block written into a private cache of a processor core in the multiple chip multiprocessor, and each entry of the inter-chip directory records a data block identifier and a chip identifier list of a processor chip storing the data block; and the processor chip comprises at least two cores and an on-chip directory corresponding to the processor chip, each of the at least two cores comprises a private cache used for storing a data block, each entry of the on-chip directory is in one-to-one correspondence with each data block written into a private cache of a processor core in the processor chip, and each entry of the on-chip directory records a data block identifier, a core identifier list of a processor core storing the data block, and an on-chip unique identifier, wherein the on-chip unique identifier is used to identify whether the data block is unique to the processor chip in the multiple chip multiprocessor; and
the method comprises:
receiving a write request for a first data block, wherein the write request is sent by a first processor core of a first processor chip, and the write request comprises an identifier of the first data block and to-be-written data;
finding, in an on-chip directory of the first processor chip based on the identifier of the first data block, an on-chip directory entry corresponding to the first data block, determining, from the found on-chip directory entry, a core identifier of a processor core storing the first data block, and sending, to the processor core corresponding to the core identifier, an instruction message for deleting the first data block;
when it is determined, based on an on-chip unique identifier in the on-chip directory entry, that the first data block is unique to the first processor chip, skipping sending an inter-chip directory query request for the first data block; and
instructing the first processor core to write the to-be-written data into a private cache of the first processor core.

2. The method according to claim 1, wherein when it is determined, based on the on-chip unique identifier in the on-chip directory entry, that the first data block is not unique to the first processor chip, the method further comprises:
sending an inter-chip directory query request for the first data block to the inter-chip directory, wherein the query request comprises the identifier of the first data block;
querying the inter-chip directory based on the identifier of the first data block, and determining an inter-chip directory entry corresponding to the first data block;
determining, from the inter-chip directory entry, a chip identifier of a processor chip storing the first data block, and sending, to another processor chip that is corresponding to the chip identifier and that is different from the first processor chip, an instruction message for deleting the first data block, wherein the instruction message comprises the identifier of the first data block; and
instructing the first processor core to write the to-be-written data into the private cache of the first processor core.

3. The method according to claim 1 or 2, wherein after the instructing the first processor core to write the to-be-written data into the private cache of the first processor core, the method further comprises:
instructing the first processor chip to write the to-be-written data into a shared cache of the first processor chip.

4. The method according to any one of claims 1 to 3, wherein when an entry corresponding to the first data block cannot be found in the on-chip directory of the first processor chip based on the identifier of the first data block, and an entry corresponding to the identifier of the first data block is found in the inter-chip directory based on the identifier of the first data block,
finding, in the inter-chip directory based on the identifier of the first data block, the inter-chip directory entry corresponding to the first data block, determining, from the inter-chip directory entry, the chip identifier of the processor chip storing the first data block, and sending, to the processor chip corresponding to the chip identifier, an instruction message for deleting the first data block, wherein the instruction message comprises the identifier of the first data block;
instructing the first processor core to write the to-be-written data into the private cache of the first processor core; and
creating an entry corresponding to the first data block in the on-chip directory of the first processor chip, writing a core identifier of the first processor core into a core identifier list, in the entry, of a processor core storing the first data block, and setting the on-chip unique identifier to true.

5. The method according to any one of claims 1 to 3, wherein when an entry corresponding to the first data block cannot be found in the on-chip directory of the first processor chip based on the identifier of the first data block, and an entry corresponding to the identifier of the first data block cannot be found in the inter-chip directory based on the identifier of the first data block,
instructing to read the first data block from a memory based on the identifier of the first data block, and storing the first data block into the private cache of the first processor core;
creating an on-chip directory entry for the first data block in the on-chip directory of the first processor chip, recording an identifier of the first processor core into a core identifier list of a processor core storing the first data block, and setting the on-chip unique identifier to true; and
creating an inter-chip directory entry corresponding to the first data block in the inter-chip directory, and recording an identifier of the first processor chip into a chip identifier list of a processor chipstoring the first data block.

6. The method according to claim 2 or 4, wherein after the another processor chip that is corresponding to the chip identifier and that is different from the first processor chip receives the instruction message for deleting the first data block, the method further comprises:
finding, by each processor chip different from the first processor chip, in an on-chip directory of each processor chip based on the identifier of the first data block, an on-chip directory entry corresponding to the first data block, determining, from each on-chip directory entry corresponding to the first data block, a core identifier of a processor core storing the first data block, and sending, to the processor core corresponding to the core identifier, the instruction message for deleting the first data block.

7. A multiple chip multiprocessor, wherein the multiple chip multiprocessor comprises at least two processor chips and an inter-chip directory cache, the inter-chip directory cache comprises an inter-chip directory storage unit and an inter-chip directory control unit, each inter-chip directory entry stored in the inter-chip directory storage unit is in one-to-one correspondence with each data block written into a private cache of a processor core in the multiple chip multiprocessor, and each inter-chip directory entry records a data block identifier and a chip identifier list of a processor chip storing the data block; and the processor chip comprises at least two cores and an on-chip directory cache corresponding to the processor chip, the on-chip directory cache comprises an on-chip directory storage unit and an on-chip directory control unit, each of the at least two cores comprises a private cache used for storing a data block, each on-chip directory entry stored in the on-chip directory storage unit is in one-to-one correspondence with each data block written into the private cache of the processor core in the processor chip, and each on-chip directory entry records a data block identifier, a core identifier list of a processor core storing the data block, and an on-chip unique identifier, wherein the on-chip unique identifier is used to identify whether the data block is unique to the processor chip in the multiple chip multiprocessor;
an on-chip directory control unit of a first processor chip receives a write request for a first data block, wherein the write request is sent by a first processor core of the first processor chip, and the write request comprises an identifier of the first data block and to-be-written data;
the on-chip directory control unit of the first processor chip finds, in an on-chip directory storage unit of the first processor chip based on the identifier of the first data block, an on-chip directory entry corresponding to the first data block, determines, from the found on-chip directory entry, a core identifier of a processor core storing the first data block, and sends, to the processor core corresponding to the core identifier, an instruction message for deleting the first data block;
when it is determined, based on an on-chip unique identifier in the on-chip directory entry, that the first data block is unique to the first processor chip, the on-chip directory control unit of the first processor chip skips sending an inter-chip directory query request for the first data block to the inter-chip directory control unit; and
the on-chip directory control unit of the first processor chip instructs the first processor core to write the to-be-written data into a private cache of the first processor core.

8. The multiple chip multiprocessor according to claim 7, wherein when it is determined, based on the on-chip unique identifier in the on-chip directory entry, that the first data block is not unique to the first processor chip,
the on-chip directory control unit of the first processor chip sends, to the inter-chip directory control unit, an inter-chip directory query request for the first data block, wherein the query request comprises the identifier of the first data block;
the inter-chip directory control unit queries the inter-chip directory storage unit based on the identifier of the first data block, and determines an inter-chip directory entry corresponding to the first data block;
the inter-chip directory control unit determines, from the inter-chip directory entry, a chip identifier of a processor chip storing the first data block, and sends, to another processor chip that is corresponding to the chip identifier and that is different from the first processor chip, an instruction message for deleting the first data block, wherein the instruction message comprises the identifier of the first data block; and
the on-chip directory control unit of the first processor chip instructs the first processor core to write the to-be-written data into the private cache of the first processor core.

9. The multiple chip multiprocessor according to claim 7 or 8, wherein after instructing the first processor core to write the to-be-written data into the private cache of the first processor core,
the on-chip directory control unit of the first processor chip is further configured to instruct the first processor chip to write the to-be-written data into a shared cache of the first processor chip.

10. The multiple chip multiprocessor according to any one of claims 7 to 9, wherein when an entry corresponding to the first data block cannot be found in the on-chip directory storage unit of the first processor chip based on the identifier of the first data block, and an entry corresponding to the identifier of the first data block is found in the inter-chip directory storage unit based on the identifier of the first data block,
the on-chip directory control unit of the first processor chip is further configured to instruct the inter-chip directory control unit to find, in the inter-chip directory storage unit based on the identifier of the first data block, the inter-chip directory entry corresponding to the first data block, determine, from the inter-chip directory entry, the chip identifier of the processor chip storing the first data block, and send, to the processor chip corresponding to the chip identifier, an instruction message for deleting the first data block, wherein the instruction message comprises the identifier of the first data block;
the on-chip directory control unit of the first processor chip is further configured to instruct the first processor core to write the to-be-written data into the private cache of the first processor core; and
the on-chip directory control unit of the first processor chip is further configured to create an entry corresponding to the first data block in the on-chip directory of the first processor chip, write a core identifier of the first processor core into a core identifier list, in the entry, of a processor core storing the first data block, and set the on-chip unique identifier to true.

11. The multiple chip multiprocessor according to any one of claims 7 to 9, wherein when an entry corresponding to the first data block cannot be found in the on-chip directory storage unit of the first processor chip based on the identifier of the first data block, and an entry corresponding to the identifier of the first data block cannot be found in the inter-chip directory storage unit based on the identifier of the first data block,
the on-chip directory control unit of the first processor chip is further configured to instruct to read the first data block from a memory based on the identifier of the first data block, and store the first data block into the private cache of the first processor core;
the on-chip directory control unit of the first processor chip is further configured to create an on-chip directory entry for the first data block in the on-chip directory of the first processor chip, record an identifier of the first processor core into a core identifier list of a processor core storing the first data block, and set the on-chip unique identifier to true; and
the on-chip directory control unit of the first processor chip is further configured to instruct the inter-chip directory control unit to create an inter-chip directory entry corresponding to the first data block in the inter-chip directory, and record an identifier of the first processor chip into a chip identifier list of a processor chip storing the first data block.

12. The multiple chip multiprocessor according to claim 8 or 10, wherein after the processor chip corresponding to the chip identifier receives the instruction message for deleting the first data block,
an on-chip directory control unit of each processor chip is configured to find, in an on-chip directory storage unit of each processor chip based on the identifier of the first data block, an on-chip directory entry corresponding to the first data block, determine, from each on-chip directory entry corresponding to the first data block, a core identifier of a processor core storing the first data block, and instruct the processor core corresponding to the core identifier to delete the first data block from a private cache.
